# EUROPÄISCHE PATENTSCHRIFT

(11) **EP 1 075 658 B1**
(45) Veröffentlichungstag und Bekanntmachung des Hinweises auf die Patenterteilung: **30.06.2004**
(21) Anmeldenummer: 99924829.7
(22) Anmeldetag: 27.04.1999
(51) Int. Cl.: G01N 27/82

(54) **VERFAHREN UND VORRICHTUNG ZUR ERFASSUNG VON UNGLEICHMÄSSIGKEITEN IN DER WANDDICKE UNZUGÄNGLICHER METALLISCHER ROHRE**
METHOD AND DEVICE FOR DETECTING IRREGULARITIES IN THE THICKNESS OF THE WALLS OF INACCESSIBLE METAL PIPES
PROCEDE ET DISPOSITIF POUR DETECTER DES INEGALITES DE L'EPAISSEUR DE LA PAROI DE TUYAUX METALLIQUES INACCESSIBLES

(30) Priorität: 29.04.1998 DE 19819066
(43) Veröffentlichungstag der Anmeldung: 14.02.2001
(73) Patentinhaber: NP Inspection Services GmbH, 31137 Hildesheim (DE)
(72) Erfinder: HINKEN, Johann, H., D-31139 Hildesheim (DE); KLINGER, Martin, D-23714 Malente (DE); KRIVOI, Guennadi, D-12526 Berlin (DE)
(74) Vertreter: Becker Kurig Straus
(86) Internationale Anmeldenummer: PCT/EP1999/002851
(87) Internationale Veröffentlichungsnummer: WO 1999/056123

(56) Entgegenhaltungen:
- GB-A- 2 143 331
- US-A- 4 048 558
- US-A- 4 982 158

## Beschreibung

Die vorliegende Erfindung betrifft ein Verfahren zur Erfassung von Ungleichmäßigkeiten in der Wanddicke unzugänglicher metallischer Rohre sowie eine Vorrichtung insbesondere zur Durchführung des Verfahrens.

Heutzutage werden Rohre, insbesondere Pipelines, die vergraben oder aus sonstigem Grunde nicht unmittelbar zugänglich sind, mit sogenannten Molchen geprüft. Herkömmliche Molche sind aus: Non-destructive Testing Handbook, Second Edition, Volume 10, Non-destructive Testing Overview, American Society for Non-destructive Testing, 1996, Seite 252 bekannt. Dabei besteht ein wesentliches Prüfziel darin, die aktuelle Wanddicke in Abhängigkeit von Umfangswinkel und von der Längskoordinate zu messen. Dafür wird der Molch mit unterschiedlichen Sensoren ausgerüstet.. z. B. für Ultraschallprüfungen, Streuflußprüfungen und zum mechanischen Abtasten bzw. Messen des Innendurchmessers.

Nachteile bzw. Grenzen des Einsatzes derartiger Molche sind unter anderem Rohrbiegungen mit zu kleinem Krümmungsradius, nicht axiale stumpfe Verbindungen mit zu großem Differenzwinkel zwischen den Achsen, ein zu kleiner Rohrinnendurchmesser, zu starke Durchmesseränderungen, die Offline-Auswertung und ein erheblicher technischer Aufwand.

Die DE 4004170 A1 betrifft ein Verfahren und eine Vorrichtung zum Überwachen des Auftretens und der Ausbreitung von Brüchen oder Rissen in Materialien. Werkstücken, Bauteilen. Bauwerken oder Himmelskörpern, insbesondere in erdbebengefährdeten Gebieten oder bei Gebirgsbewegungen im Tunnelbau. Dieses Verfahren sieht jedoch lediglich vor, elektrische Feldänderungen zu erfassen. Eine aktive Meßanordnung, bei der Strom durch Rohre geschickt wird, fehlt bei dieser Schrift.

Die DE 4105842 A1 betrifft ein Verfahren zur Lokalisierung von Muffen in unterirdisch verlegten ferromagnetischen Rohrleitungen. Dabei steht die Erfassung von Abdichtungen bzw. Muffen im Vordergrund. Das Verfahren sieht eine künstliche Magnetisierung des Rohrelements mittels einer Erregerspule im Rohr vor. Die Durchleitung eines Stroms wird nicht offenbart.

Die DE 3623588 A1 betrifft eine Vorrichtung zur Ortung von nicht freiliegenden elektrischen Leitungen. Dieses Verfahren sieht vor, daß an die Zuleitung ein elektrischer Tonfrequenzgenerator angeschlossen wird, wobei eine Suchsonde als elektrischer Tonfrequenzempfänger dient. Auch hierbei werden keine Anomalien in Rohren durch Durchleiten von Strömen erfaßt.

Schließlich ist aus der US 4048558 ein Verfahren bekannt, bei dem ein Strom durch ein Metallrohr bei unterschiedlichen Frequenzen geleitet wird und die Impedanz überwacht wird.

Ferner mangelt es herkömmlichen Verfahren zur zerstörungsfreien Werkstoffprüfung, wie sie z.B. zur Materialprüfung auf Risse und Defekte eingesetzt werden, meist an der Möglichkeit, zuverlässige Informationen über die Tiefe von Defekten zu bestimmen und/oder sie unterliegen dem Nachteil, dass das Prüfverfahren selbst eine Vorzugsrichtung definiert, so daß Defekte, die nicht in dieser orientiert sind, schwerlich oder praktisch gar nicht detektiert werden können.

Die US 4,982,158 betrifft eine Vorrichtung zum Abbilden und Analysieren eines Magnetfelds, das durch Testströme erzeugt wird, die eine Komponente aus elektrisch leitfähigem Material aufweist, um Inhomogenitäten in der zu testenden Komponente zu ermitteln. Die Vorrichtung verwendet insbesondere ein SQUID-Detektorarray, um das Magnetfeld flächig zu erfassen. Die Testströme können in ihrer Frequenz, Amplitude und Orientierung verändert werden, um weitgehend sicherzustellen, dass Inhomogenitäten unabhängig von ihren Vorzugsrichtungen, Abmessungen (Tiefe, Breite, Länge) etc. erfasst werden können.

Der Erfindung liegt die Aufgabe zugrunde, ein Verfahren und eine Vorrichtung zur Erfassung von Ungleichmäßigkeiten in der Wanddicke unzugänglicher metallischer Rohre anzugeben, mit dem berührangslos und aus einem gewissen Abstand erkannt werden kann, ob die Wanddicke eines zu prüfenden Rohres entlang des Umfangs ungleichmäßig ist. Solche Ungleichmaßigkeiten können infolge von Korrosion, z.B. von innen her auftreten. Insbesondere sollen auch tiefliegende und durch andere Schichten verdeckte Rohre geprüft werden können.

Diese Aufgabe wird erfindungsgemäß gelöst durch ein Prüfverfahren nach Anspruch 1 und eine Vorrichtung insbesondere zur Durchführung des Prüfverfahrens nach Anspruch 12. Die Erfindung liefert ein zerstörungsfreies Prüfverfahren sowie eine entsprechende Vorrichtung zur berührungslosen Erkennung von Ungleichmäßigkeiten in der Wanddicke von unzugänglichen metallischen Rohren. Da derartige Ungleichmäßigkeiten vor allem durch Korrosion hervorgerufen werden, ist dieses Verfahren besonders nützlich bei der frühzeitigen Erkennung von korrosionsverursachten Wanddickenverminderungen in Pipelines. Das Verfahren beruht darauf, daß elektrische Ströme unterschiedlicher Frequenz gleichzeitig durch das Rohr geleitet werden. Da die Eindringtiefe des Stroms in die Wand hinein von der Frequenz abhängt, ergibt sich dabei im Schadensfall eine Verschiebung der Stromschwerpunkte und damit der gemessenen magnetischen Feldstärke im Meßabstand von dem Rohr. Die Vorrichtung ist transportabel.

Es ist bevorzugt, daß die Wechselströme zwei unterschiedliche Frequenzkomponenten aufweisen. Es ist bevorzugt, daß die Magnetfelder an demselben Ort gemessen werden. Ferner ist bevorzugt, daß beide Frequenzkomponenten durch Ströme der gleichen Amplituden erzeugt werden und das Verhältnis der Magnetfeldkomponenten ausgewertet wird. Ferner ist bevorzugt, daß zunächst die Verhältnisse von Magnetfeld zu Strom bei den einzelnen Frequenzen gebildet wird, dann deren Verhältnis gebildet und anschließend ausgewertet wird. Ferner ist bevorzugt, daß der Rückstrom durch eine Leitung geleitet wird, die zu dem zu vermessenden Rohr in genügendem Abstand, vorzugsweise parallel verläuft. Ferner ist bevorzugt ein Magnetfeldsensor vorgesehen, der die Umfangskomponente des Magnetfeldes mißt. Alternativ ist ein Magnetfeldsensor vorgesehen, der die zur Erdoberfläche tangentiale Komponente des Magnetfeldes mißt. Schließlich ist alternativ ein Magnetfeldsensor vorgesehen, der die zur Erdoberfläche normale Komponente des Magnetfeldes mißt.

Schließlich sind bevorzugt mindestens zwei Sensoren vorgesehen, mit denen gleichzeitig gemessen wird, um eine Ortung des Rohres vornehmen zu können. Der Strom bei der niedrigsten Frequenz kann im Grenzfall im wesentliche ein Gleichstrom sein.

Die Vorrichtung, insbesondere zur Durchführung des vorstehend beschriebenen Prüfverfahrens, schließt eine Stromquelle, mindestens eine Magnetfeldsonde und eine Auswertungsvorrichtung ein. Die Stromquelle ist in Übereinstimmung mit dem Verfahren in der Lage, gleichzeitig Wechselströme unterschiedlicher Frequenz für die Durchleitung durch das zu prüfende Rohr zu schicken. Die mindestens eine Magnetfeldsonde, die in einem Meßabstand von dem Rohr angeordnet ist, eignet sich zur Messung der durch die Wechselströme erzeugten Magnetfelder außerhalb des Rohres. Und die Auswertungseinrichtung ist angepaßt, das Vorhandensein einer Ungleichmäßigkeit in der Wanddicke aus dem Magnetfeldsignal der Magnetfeldsonde abzuleiten.

Bei der Vorrichtung insbesondere zur Durchführung des Verfahrens ist bevorzugt eine Strommeßeinrichtung vorgesehen, die den durch das Rohr fließenden Strom mißt. Ferner ist bevorzugt, daß die Auswertungseinrichtung auch das von der Strommeßeinrichtung gelieferte Stromsignal aufnimmt und das Verhältnis zwischen Magnetfeldsignal und Stromsignal auswertet.

Weitere Vorteile, Merkmale und Anwendungsmöglichkeiten der vorliegenden Erfindung ergeben sich aus der nachfolgenden Beschreibung von bevorzugten Ausführungsbeispielen in Verbindung mit der Zeichnung.

Fig. 1a zeigt bei einem Rohrquerschnitt ohne Defekt die Stromverteilung bei niedriger Frequenz.

Fig. 1b zeigt bei einem Rohrquerschnitt ohne Defekt die Stromverteilung bei hoher Frequenz.

Fig. 2a zeigt die Stromverteilung bei niedriger Frequenz am Beispiel eines Rohrquerschnitts mit Defekt. nämlich Rohrverdünnung an der Innenseite unten.

Fig. 2b zeigt die Stromverteilung bei hoher Frequenz bei einem Rohrquerschnitts mit Defekt, nämlich Rohrverdünnung an der Innenseite unten.

Fig. 3 zeigt den schematischen Aufbau der Vorrichtung zur Durchführung des Prüfverfahrens.

Fig. 4 zeigt das Stromsignal der Stromquelle in Abhängigkeit von der Zeit.

Fig. 5a zeigt einen Rohrquerschnitt ohne Defekt.

Fig. 5b zeigt einen Rohrquerschnitt mit künstlichem Defekt.

Fig. 6 zeigt das Meßsignal aufgrund des künstlichen Defekts und in seiner Umgebung.

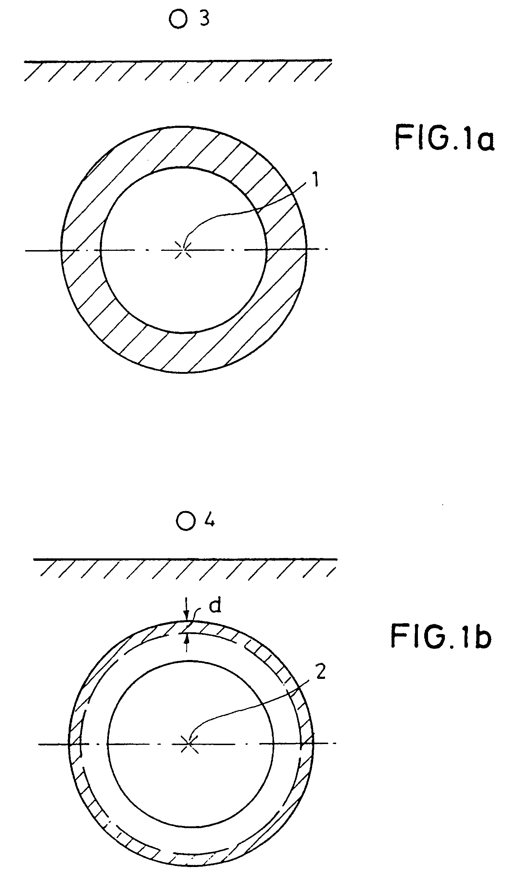

Fig. 1a zeigt die Stromverteilung bei niedriger Frequenz am Beispiel eines Rohrquerschnitts ohne Defekt. Der eingeprägte Strom fließt in Rohrlängsrichtung, d.h. senkrecht zur Zeichenebene. Für niedrige Frequenzen, d.h. wenn die Skineindringtiefe ungefähr gleich oder größer als die Wandstärke ist, wird die Wand vollständig von Strom durchsetzt. Fig. 1b zeigt den selben Fall bei Anwendung eines Stroms mit hoher Frequenz. Bei hoher Frequenz wird der Strom an die äußere Oberfläche verdrängt und fließt nur in einer Eindringtiefe d. Wegen der Symmetrie der Anordnung sind die Stromschwerpunkte 1 und 2 am selben Ort. Die Meßpunkte 3 und 4 sind am selben Ort. Bei gleicher Stromstärke wird dann am Meßpunkt 3 bzw. 4 die gleiche magnetische Feldstärke gemessen.

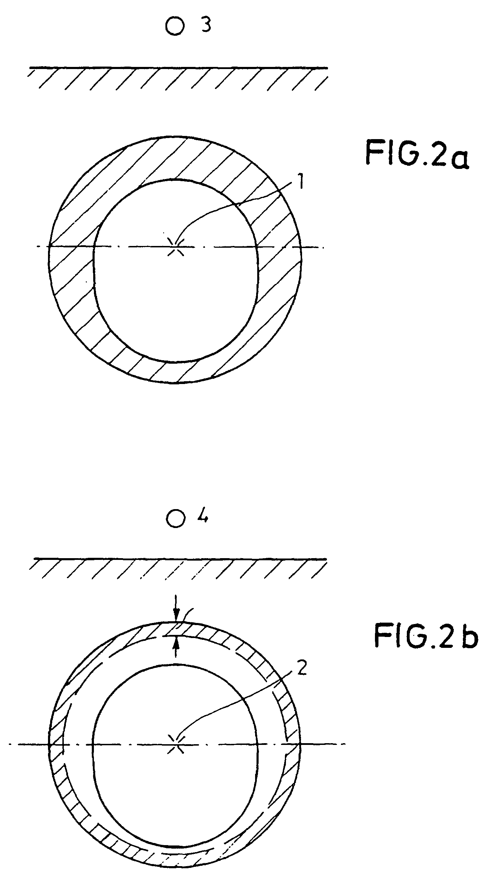

Fig. 2a und 2b zeigen Rohrquerschnitte mit einem Defekt, nämlich einer Verdünnung der Wanddicke an der Innenseite. Bei einer genügend niedrigen Frequenz durchsetzt der Strom die gesamte zur Verfügung stehende Querschnittsfläche der Wand gleichmäßig. Der Querschnitt des Stromes hat sich wegen der Unsymmetrie der Stromverteilung hierbei jedoch gemäß Fig. 2a vom Mittelpunkt des Außenkreises aus gesehen nach oben verschoben. Fig. 2b zeigt die Stromverteilung bei genügend hoher Frequenz. Sie ist gegenüber der Verteilung ohne Defekt unverändert. Der Stromschwerpunkt ist gleich dem Mittelpunkt des Außenkreises. Gegenüber den Meßpunkten 3 und 4 ist der Abstand des Stromschwerpunkts im Falle niedriger Frequenz kleiner und im Fall hoher Frequenz größer. Damit ist bei gleichen Stromstärken das erzeugte Magnetfeld am Meßpunkt 3 bei niedriger Frequenz höher als im Meßpunkt 4 bei hoher Frequenz. Bei dem erfindungsgemäßen Verfahren werden grundsätzlich Wechselströme unterschiedlicher Frequenz, aber gleicher Amplitude, durch das zu prüfende Rohr in Längsrichtung geleitet. Für beide Frequenzen wird die magnetische Feldstärke am gleichen Ort über dem Rohr gemessen. Eine unterschiedliche Feldstärke zeigt eine Ungleichmäßigkeit der Wanddicke an. Das Verfahren bedarf keines Zugangs zum Inneren des zu prüfenden Rohrs. Es werden elektrische Ströme unterschiedlicher Frequenz entlang eines Prüfabschnitts durch das zu prüfende Rohr geleitet.

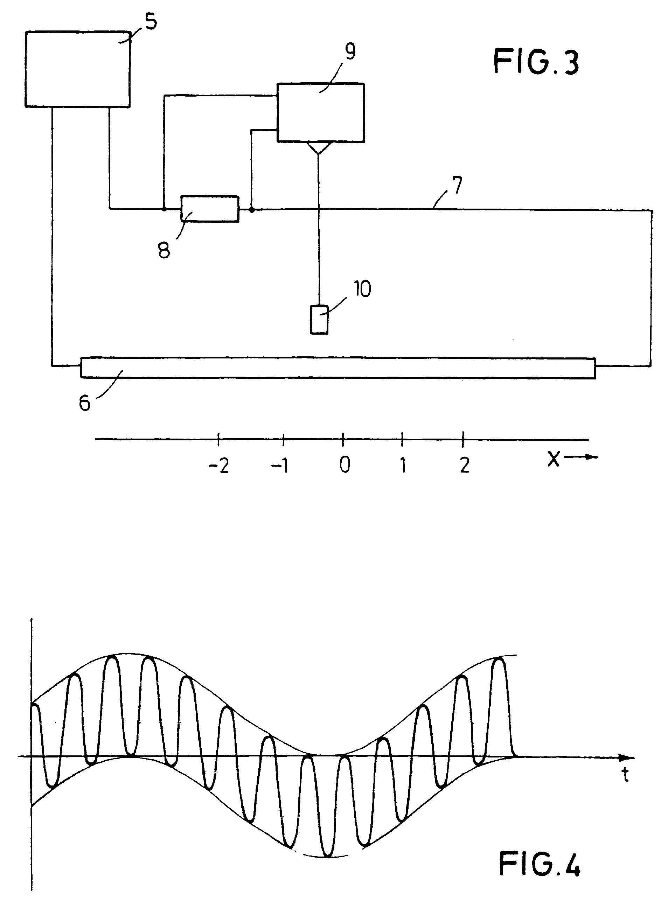

Fig. 3 zeigt den prinzipiellen Aufbau der Meßvorrichtung. Eine Stromquelle 5 erzeugt den Meßstrom. Dieser wird durch das zu vermessende Rohr 6 geleitet sowie über eine in einigen Metern Abstand vom Meßobjekt befindliche Rückleitung 7 zurückgeleitet. Die Rückleitung 7 ist bevorzugt parallel zum Rohr 6 angeordnet. In den Stromleitungskreis eingeschleift ist ein Meßwiderstand 8, dessen Spannungsabfall ein Maß für den Meßstrom ist. Dieser Spannungsabfall wird einem Kanal eines Spektrumanalysators 9 zugeleitet, der als Auswertungsvorrichtung dient. Der zweite Kanal des Spektrumanalysators 9 erhält das Meßsignal von einer Magnetfeldsonde 10. Die Magnetfeldsonde 10 ist in x-Richtung, d.h. in Längsrichtung des Rohrs verschieblich angeordnet.

In einer Abwandlung des prinzipiellen Meßverfahrens werden in einem Ausführungsbeispiel die beiden Ströme mit unterschiedlicher Frequenz zeitgleich durch das Meßobjekt geleitet. Fig. 4 zeigt den Zeitverlauf (nicht maßstabsgerecht) des Stromsignals. Die Frequenzen betragen f₁ = 10 Hz und f₂ = 1kHz.

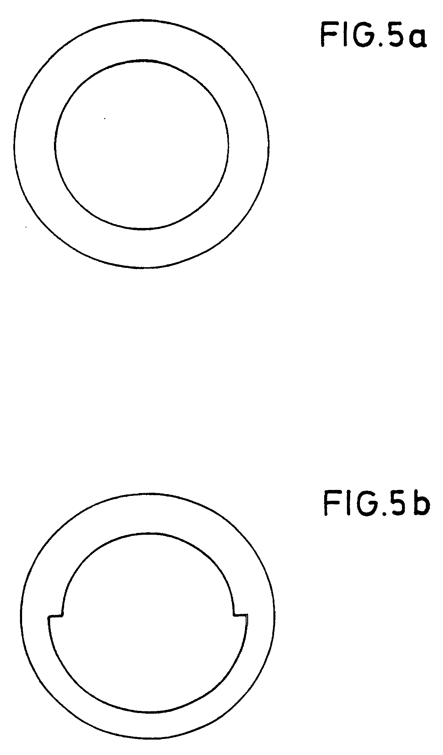

Fig. 5 zeigt den Querschnitt eines 7 m langen Rohres, wobei Fig. 5a den Rohrquerschnitt ohne Defekt und Fig. 5b den Rohrquerschnitt mit künstlichem Defekt zeigt, der sich von x = -0.5 m bis x = +0,5 m erstreckt.

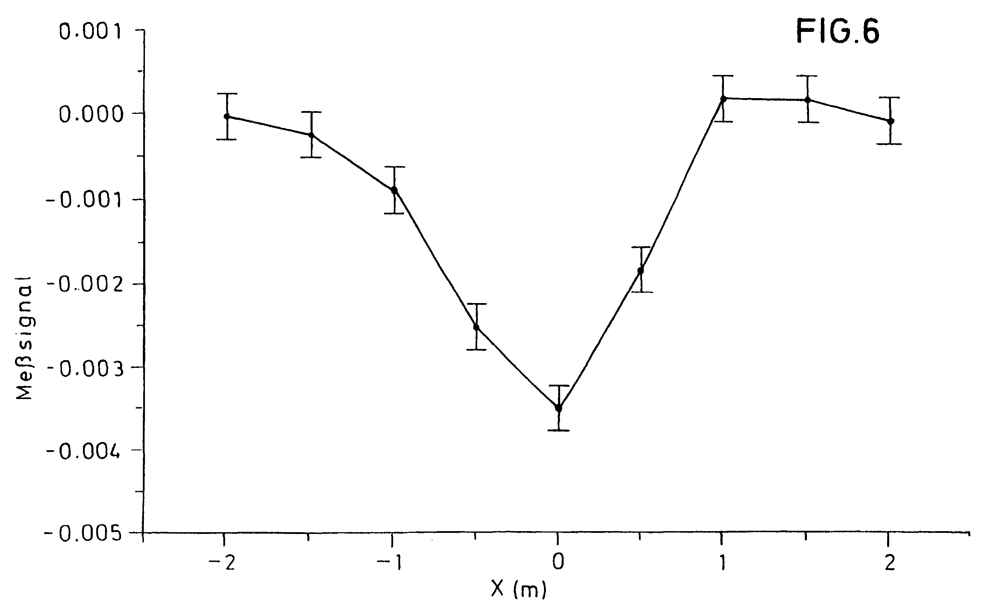

In einer weiteren Abwandlung des oben beschriebenen prinzipiellen Meßverfahrens wird in einem weiteren Ausführungsbeispiel als Meßergebnis nicht das Verhältnis der magnetischen Feldstärken bei den Frequenzen f₁ und f₂ bei gleichen Stromstärken aufgetragen, sondern das um eins verminderte Verhältnis der jeweiligen Magnetfeld-zu-Strom-Verhältnisse. Damit wird einer Ungleichmäßigkeit der Stromamplituden bei f₁ und f₂ Rechnung getragen. Dieser Wert ist in Fig. 6 über der Sensorposition x aufgetragen. Der Sensor befindet sich hier bei 55 cm außerhalb des Rohres. Die Stromamplituden betragen jeweils 6,5 A. Fig. 6 zeigt deutlich das Vorhandensein des künstlichen Defektes. Das Meßsignal ist deutlich größer als der Fehlerbereich, der jeweils als Meßfehlerbalken bei jedem Meßwert in Fig. 6 eingetragen ist.

## Patentansprüche

1. Prüfverfahren zur Erfassung von Ungleichmäßigkeiten in der Wanddicke unzugänglicher metallischer Rohre, **dadurch gekennzeichnet, daß** elektrische Wechselströme unterschiedlicher Frequenz gleichzeitig durch das Rohr geleitet werden und die von ihnen erzeugten Magnetfelder außerhalb des Rohres in einem bestimmten Meßabstand gemessen werden.

2. Verfahren nach Anspruch 1, **dadurch gekennzeichnet, daß** die Wechselströme zwei unterschiedliche Frequenzkomponenten aufweisen.

3. Verfahren nach Anspruch 2, **dadurch gekennzeichnet, daß** die Magnetfelder an dem selben Ort gemessen werden.

4. Verfahren nach Anspruch 2 oder 3, **dadurch gekennzeichnet, daß** beide Frequenzkomponenten durch Ströme der gleichen Amplitude erzeugt werden und das Verhältnis der Magnetfeldkomponenten ausgewertet wird.

5. Verfahren nach Anspruch 4, **dadurch gekennzeichnet, daß** zunächst die Verhältnisse von Magnetfeld zu Strom bei den einzelnen Frequenzen gebildet wird, dann deren Verhältnis gebildet und anschließend ausgewertet wird.

6. Verfahren nach Anspruch 1, **dadurch gekennzeichnet, daß** der Rückstrom durch eine Leitung geleitet wird, die zu dem zu vermessenden Rohr parallel verläuft.

7. Verfahren nach Anspruch 1, **dadurch gekennzeichnet, daß** ein Magnetfeldsensor vorgesehen ist, der die Umfangskomponente des Magnetfeldes mißt.

8. Verfahren nach Anspruch 1, **dadurch gekennzeichnet, daß** ein Magnetfeldsensor vorgesehen ist, der die zur Erdoberfläche tangentiale Komponente des Magnetfeldes mißt.

9. Verfahren nach Anspruch 1, **dadurch gekennzeichnet , daß** ein Magnetfeldsensor vorgesehen ist, der die zur Erdoberfläche normale Komponente des Magnetfeldes mißt.

10. Verfahren nach Anspruch 1, **dadurch gekennzeichnet, daß** mit mindestens zwei Sensoren gleichzeitig gemessen wird, um eine Ortung des Rohres vornehmen zu können.

11. Verfahren nach Anspruch 1, **dadurch gekennzeichnet, daß** der Strom bei der niedrigsten Frequenz im wesentlichen ein Gleichstrom ist.

12. Vorrichtung, insbesondere zur Durchführung des Prüfverfahrens nach Anspruch 1, aufweisend
eine Stromquelle zur Durchleitung von Wechselströmen unterschiedlicher Frequenzen durch ein Rohr (6),
mindestens eine Magnetfeldsonde zur Messung des durch die Wechselströme erzeugten Magnetfelds außerhalb des Rohres (6), die in einem Messabstand vom Rohr (6) angeordnet ist,
eine Auswertungseinrichtung (9), die aus dem Magnetfeldsignal der Magnetfeldsonde (10) das Vorhandensein einer Ungleichmäßigkeit der Wanddicke ableiten kann.
**dadurch gekennzeichnet, dass**
die Stromquelle zur gleichzeitigen Durchleitung der Wechselströme unterschiedlicher Frequenzen durch das Rohr (6) geeignet ist und
die mindestens eine Magnetfeldsonde (10) zur Messung der durch die Wechselströme erzeugten Magnetfelder außerhalb des Rohres (6) geeignet ist.

13. Vorrichtung nach Anspruch 12, **dadurch gekennzeichnet, daß** eine Strommeßeinrichtung vorgesehen ist, die den durch das Rohr fließenden Strom mißt.

14. Vorrichtung nach Anspruch 13, **dadurch gekennzeichnet, daß** die Auswertungseinrichtung (9) auch das von der Strommeßeinrichtung gelieferte Stromsignal aufnimmt und das Verhältnis zwischen Magnetfeldsignal und Stromsignal auswertet.

## Claims

1. Detection procedure for detecting non-uniformities in the wall thickness of inaccessible metallic pipes, **characterized in that** electrical alternating currents of different frequencies are simultaneously passed through said pipe, and the magnetic fields generated by them are measured outside of said pipe at a certain measuring distance.

2. Procedure according to claim 1, **characterized in that** said alternating currents comprise two different frequency components.

3. Procedure according to claim 2, **characterized in that** said magnetic fields are measured at the same location.

4. Procedure according to claim 2 or 3, **characterized in that** both frequency components are generated by currents having the same amplitude, and that the ratio of the magnetic field components is evaluated.

5. Procedure according to claim 4, **characterized in that** first the ratios of magnetic field and current are calculated at the individual frequencies, and their ratio is calculated and subsequently evaluated then.

6. Procedure according to claim 1, **characterized in that** the return current is passed through a line running parallel to the pipe to be surveyed.

7. Procedure according to claim 1, **characterized in that** a magnetic field probe is provided which measures the circumferential component of the magnetic field.

8. Procedure according to claim 1, **characterized in that** a magnetic field probe is provided which measures the magnetic field component tangential to the earth's surface.

9. Procedure according to claim 1, **characterized in that** a magnetic field probe is provided which measures the magnetic field component normal to the earth's surface.

10. Procedure according to claim 1, **characterized in that** measuring is performed with at least two probes simultaneously, in order to be able to determine the position of said pipe.

11. Procedure according to claim 1, **characterized in that** the current at the lowest frequency is substantially a direct current.

12. Device, particularly for performing the detection procedure according to claim 1, comprising:
- a power source for passing alternating currents of different frequencies through a pipe (6);
- at least one magnetic field probe for measuring the magnetic fields generated by said alternating currents outside said pipe (6), said probe being arranged at a measuring distance from said pipe (6);
- an evaluation equipment (9) which is able to deduce the presence of a non-uniformity of the wall thickness from the magnetic field signal of the magnetic field probe (10),
**characterized in that**
said power source is suitable for simultaneously passing said alternating currents of different frequencies through said pipe (6), and
said at least one magnetic field probe (10) is suitable for measuring of the magnetic fields generated by said alternating currents outside said pipe (6).

13. Device according to claim 12, **characterized in that** a current measuring device is provided which measures the current flowing through said pipe.

14. Device according to claim 13, **characterized in that** the evaluation equipment (9) also receives the current signal supplied by said current measuring device and evaluates the ratio of magnetic field and current signal.

## Revendications

1. Procédé de test pour détecter des inégalités de l'épaisseur de la paroi de tuyaux métalliques inaccessibles, **caractérisé en ce que** des courants alternatifs électriques de fréquence différente sont conduits simultanément à travers le tuyau et **en ce que** sont mesurés les champs magnétiques qu'ils produisent, à l'extérieur du tuyau, dans un espace de mesure défini.

2. Procédé selon la revendication 1, **caractérisé en ce que** les courants alternatifs présentent deux composants de fréquence différents.

3. Procédé selon la revendication 2, **caractérisé en ce que** les champs magnétiques sont mesurés au même emplacement.

4. Procédé selon la revendication 2 ou 3, **caractérisé en ce que** les deux composants de fréquence sont produits par des courants de même amplitude et **en ce qu'**est évalué le rapport des composants de champ magnétique.

5. Procédé selon la revendication 4, **caractérisé en ce qu'**en premier lieu, chaque fréquence individuelle donne lieu à des rapports champ magnétique/courant, chacun étant, ensuite, établi, puis, immédiatement après, évalué.

6. Procédé selon la revendication 1, **caractérisé en ce que** le courant de retour est conduit à travers une conduite parallèle au tuyau à mesurer.

7. Procédé selon la revendication 1, **caractérisé en ce qu'**il est prévu un capteur de champ magnétique qui permet de mesurer le composant périphérique du champ magnétique.

8. Procédé selon la revendication 1, **caractérisé en ce qu'**il est prévu un capteur de champ magnétique qui permet de mesurer le composant tangentiel du champ magnétique à la surface de la terre.

9. Procédé selon la revendication 1, **caractérisé en ce qu'**il est prévu un capteur de champ magnétique qui permet de mesurer le composant normal du champ magnétique à la surface de la terre.

10. Procédé selon la revendication 1, **caractérisé en ce que** la mesure est effectuée, simultanément, à l'aide d'au moins deux capteurs afin de permettre la réalisation d'un repérage du tuyau.

11. Procédé selon la revendication 1, **caractérisé en ce que** le courant est essentiellement un courant continu dans le cas de la fréquence la plus basse.

12. Dispositif, en particulier destiné à la réalisation du procédé de test selon la revendication 1, comportant
une source de courant permettant de faire circuler des courants alternatifs de différentes fréquences à travers un tuyau (6),
au moins un détecteur de champ magnétique, permettant de mesurer le champ magnétique produit par les courants alternatifs à l'extérieur du tuyau (6)
placé dans un espace de mesure du tuyau (6) et un dispositif d'évaluation (9), permettant de déduire à partir du signal de champ magnétique du détecteur de champ magnétique (10) la présence d'une irrégularité de l'épaisseur de paroi,
**caractérisé en ce que**
la source de courant est adaptée pour faire circuler simultanément des courants alternatifs de différentes fréquences à travers le tuyau (6) et
**en ce qu'**est approprié au moins un détecteur de champ magnétique (10) pour mesurer les champs magnétiques produits par les courants alternatifs, à l'extérieur du tuyau (6).

13. Dispositif selon la revendication 12, **caractérisé en ce qu'**il est prévu un dispositif de mesure du courant, permettant de mesurer le courant parcourant le tuyau.

14. Dispositif selon la revendication 13, **caractérisé en ce que** le dispositif d'évaluation (9) reçoit également le signal de courant délivré par le dispositif de mesure du courant et **en ce qu'**est évalué le rapport entre le signal de champ magnétique et le signal de courant.
